# EUROPEAN PATENT SPECIFICATION

(11) **EP 3 037 603 B1**
(45) Date of publication and mention of the grant of the patent: **26.12.2018**
(21) Application number: 16154689.0
(22) Date of filing: 01.05.2009
(51) Int. Cl.: E04D 13/03, F16B 21/02, F16B 23/00

(54) **SKYLIGHT WITH A BURGLAR-PROOF LOCKING DEVICE**
DACHFENSTER MIT EINERDIEBSTAHLSICHERE VERRIEGELUNGSVORRICHTUNG
LANTERNEAU AVEC UN DISPOSITIF DE VERROUILLAGE INCROCHETABLE

(43) Date of publication of application: 29.06.2016
(62) Divisional of application: 09843929.2
(73) Proprietor: VKR Holding A/S, 2970 Hørsholm (DK)
(72) Inventor: PEDERSEN, Torben Allesen, 8700 Horsens (DK)
(74) Representative: AWA Denmark A/S

(56) References cited:
- DE-U1- 8 520 377
- GB-A- 2 095 356
- NL-A- 6 600 866
- NL-A- 8 702 790

## Description

The present invention relates to a skylight or roof window comprising a light dome or weather shield, the light dome or weather shield being fastened to a sash member of said window by means of a number of burglar-proof locking devices according to the introductory part of claim 1.

To shield off a window portion positioned more or less horizontally in a flat roof it is know to fasten a dome-shaped weather shield or light dome to a sash of the window portion to form a skylight or roof window. The sash is embedded in a frame, which is secured to the roof, the sash and frame together with a pane embedded in the sash forming a window portion of the window or skylight. The purpose of the weather shield is to divert water from rainfall, leaves etc. from the window by means of gravitational forces. The weather shield is typically attached to the sash by means of fasteners in the form of ordinary and/or standard threaded screws or bolts, an oblong part of each screw or bolt being guided through a peripheral hole of the weather shield. A head part of the screw or bolt abuts an upper surface of the weather shield, the oblong part extending through the hole of the weather shield to be fastened in corresponding bores of the sash.

The weather shield is typically transported separately from the sash and mounted on the sash after the window portion has been mounted in the roof. A standard tool such as a screwdriver corresponding to slots of the screws or bolts is used to fasten the screws or bolts through the holes of the weather shield and into the sash. This means, of course, that a similar standard tool can be used to release the screws or bolts, making it possible for a burglar to easily and with little preparation gain access to the window portion, the burglar only needing to carry a standard screwdriver.

A solution to this problem has been disclosed in DE 8617125 U1, which describes a burglar-proof locking device with features corresponding to the introductory part of claim 1. This locking device is used to fasten a two-layer light dome to a roof. A locking member in the form of an ordinary screw is positioned in the bottom of a hole in a profile with an interior thread. A cap with a corresponding exterior thread is then screwed into the hole, a head part of the cap comprising sloping sides, which eventually abut an upper surface of the light dome, covering the hole and screw in order to prevent the insertion of a standard screwdriver into the hole to protect the window from burglars. The sloping sides of the cap make it difficult to engage a standard tool, such as a wrench, with the cap in order to turn it. However, the cap comprises a notch or slot for a special tool, which can thus be engaged with the cap in order to rotate it such as to release it.

Because of the rotatable cap with sloping sides, the locking device of DE 8617125 U1 has the drawback of being somewhat complicated and voluminous. Further, although the sides are sloping, there is still at risk of a burglar being able to get a decent grip on the cap by means of, for example, an ordinary wrench. Below the sloping sides a strong and rigid supporting construction needs to be provided in order to ensure that the sides can withstand radial forces on the cap. Also, in order to fasten the light dome, first one fastener, i.e. the screw, needs to be fastened, and subsequently, a second fastener, i.e. the cap, needs to be fastened. In other words, two different tools are needed, and the time needed for fastening the light dome is at least doubled in relation to the conventional fastening method described above. During repairs, cleaning or dismounting the window it is equally problematic to release the light dome.

Another locking device for fastening of a light dome is known from DE 29710526 U1, which however does not disclose the use of special tools for release of the locking device.

NL 8 702 790 A discloses a skylight according to the introductory part of claim 1.

On this background it is the object of the present invention to provide a skylight or roof window according to the introductory part of claim 1, wherein the locking device is more secure and easier to attach and detach with a special tool.

To meet this object the skylight or roof window according to the present invention is characterized by the features according to the characterizing part of claim 1.

With the locking device of a skylight or roof window according to the invention only the locking means itself needs to be fastened in order to fasten a light dome; no second fastener is necessary, the cap already being attached to the locking means before fastening. This is achieved since the special tool rotates the locking means itself, not the cap. Thus, the time needed for the fastening or releasing operation by means of a special tool is significantly reduced. The locking device of a skylight or roof window according to the invention is smaller and less complicated and thus cheaper to manufacture. Further, because the cap surrounding the visible or engageable part of the locking device is freely rotatable in relation to the locking means, a burglar will not be able to release the locking device by means of an ordinary tool, e.g. a wrench. Thus, the locking device is also made more secure.

The dependent claims define preferred embodiments of the invention according to claim 1.

The invention will be explained in detail in the following by means of examples of embodiments with reference to the schematic drawing, in which
Fig. 1 is a perspective view of an embodiment of a skylight window, which can be provided with one or more burglar-proof locking devices, to realise a skylight window according to the invention,
Fig. 2 is a cross-sectional view of the window according to Fig. 1,
Fig. 3 is a detail of a cross-sectional view corresponding to that of Fig. 2, the window being provided with a fastener not according to the present invention,
Fig. 4 is a perspective view of the fastener shown in Fig. 3,
Fig. 5 is a side view of the fastener of Fig. 3,
Fig. 6 is an end view of the locking device of Fig. 3 seen from the right of the fastener as shown in Fig. 5, and
Fig. 7 is an end view of the fastener of Fig. 3 seen from the left of the fastener as shown in Fig. 5.
Fig. 8 is a perspective view of an embodiment of a locking device of a skylight or roof window according to the present invention, in which a snake-eye tool has been engaged,
Fig. 9 is a sectional side view of the locking device of Fig. 8 taken along the line IX-IX of Fig. 8,
Fig. 10 is a perspective view of the locking device of Fig. 8 sectioned as in fig. 9,

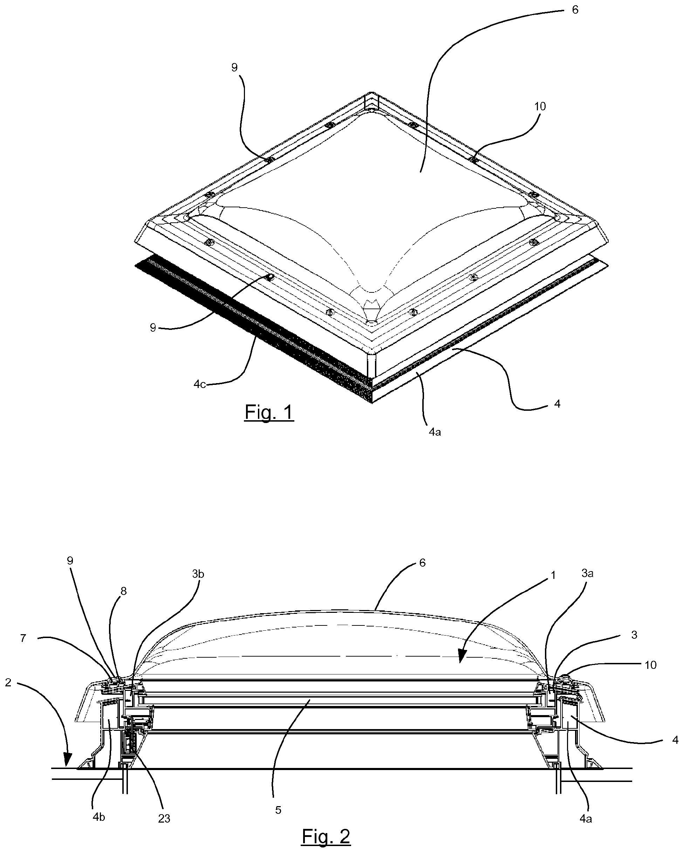

Figs 1 and 2 show different views of a skylight or roof window intended to be mounted in or on a flat roof. In the present context flat roofs are defined as roofs having an inclination in relation to horizontal of less than about 15°. The window comprises a rectangular window portion 1, which is able to rotate about a horizontal axis positioned along a bottom of the skylight (to the lower right in Fig. 1 and to the right in Fig. 2). The window portion 1 is installed in a flat roof 2 and comprises a sash 3 positioned in a frame 4, which are both made up of extruded, hollow PVC profiles. In other embodiments the frame and sash may be in the form of for example extruded aluminium profiles, and they may comprise wooden parts.

The sash 3 comprises a bottom 3a, a top 3b and two side (not shown) sash members and encloses a windowpane 5 with two layers of glazing sandwiching a layer of gas to provide insulation glazing. The frame 4 comprises a bottom 4a, a top 4b and two side frame members, of which only one side frame member, 4c, is shown (in Fig. 1). The bottom sash member 3a is rotatably connected to the bottom frame member 4a by means of two hinges (not shown) defining a rotation axis.

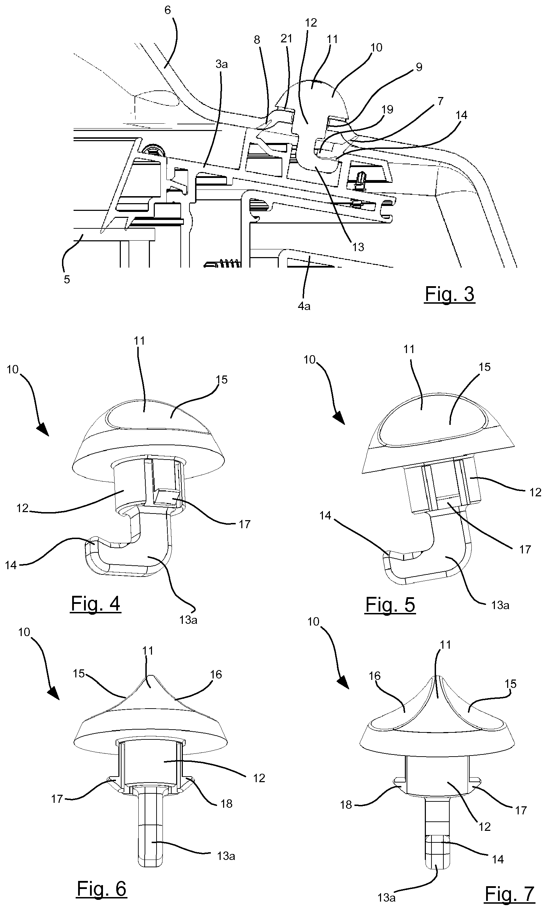

A weather shield or light dome in the form of an acrylic or polycarbonate dome 6 is attached to the sash 3 to protect the window portion 1. Lifting and rotating the sash 3 and dome 6 about the rotation axis by means of a chain operator 23 embedded in the top frame member 4b provides movement between an open and a closed position of the window. The chain operator 23 may be driven automatically and may be radio-controlled. Supporting the dome portion 6 are longitudinally extending sealing projections or weather strips 7, 8, sealing the sash 3 against the dome portion 6, cf. Figs 2 and 3.

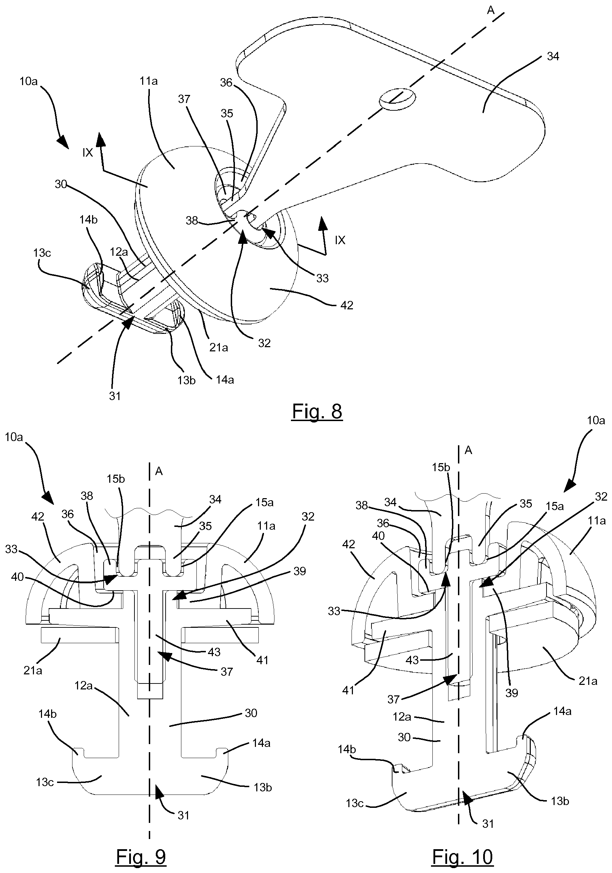

The weather shield 6 comprises peripheral holes 9. In Figs 1 and 2 a non-burglar-proof fastener 10 has been inserted through one of the peripheral holes 9, the fastener 10 being shown in Figs 3 to 7. Note that in the present embodiment similar, not shown fasteners 10 are to be inserted in some of the remaining holes 9 of the weather shield 6 as shown in Fig. 1. In the present embodiment the fastener of one hole 9 on each side of the weather shield 6 is furthermore to be replaced with a locking device 10a (not shown in Figs 1 and 2), i.e. a total number of four locking devices is preferably to be provided. However, any number between one and all of the holes 9 may be provided with a locking device 10a. The locking device 10a is an embodiment of the locking device of a skylight or roof window according to the present invention and is shown in Figs 8 to 10.

The fastener 10 is shown in more detail in Figs 3 to 7. It comprises a head part 11 connected to a connection part 12, the outer dimensions of which correspond to the inner dimensions of the holes 9. The connection part 12 extends into a first fastening means in the form of a clog-shaped radial protrusion 13a with an engagement member in the form of an upwards projecting tip end 14 of said clog shape. The head part 11 comprises grip means in the form of two finger depressions 15, 16. The connection part 12 comprises second fastening means in the form of two oppositely positioned snap locks 17, 18. The fastener 10 is integrally molded from Zytel 80633, i.e. acrylic with 33% glass.

In Figs 2 and 3 the fastener 10 is shown in a locked condition in which it fastens the weather shield 6 to the sash 3. The head part 11 has a lower, flat surface, which is positioned abutting an upper surface of the weather shield 6, the connection part 12 extending through a hole of the weather shield 6 into the bottom sash member 3a. As is visible in Fig. 3 the peripheral hole of this figure is formed in an upwardly protruding dimple 20 of the weather shield 6; the same is the case for all the peripheral holes 9. In the locked position the tip end 14 of the radial protrusion 13 engages a corresponding engagement means of the sash 3 in the form of a downwards protruding longitudinally extending bead 19. The bead 19 extends in the entire circumference of the sash 3, forming a tip end of a likewise longitudinally extending part of the sash, making it somewhat resilient in an upwards direction.

When inserting the fastener into the hole 9 the snap locks 17, 18 are positioned abutting a lower surface of the weather shield 6. Hereby, the lower surface of the head part 11 and the snap locks 17, 18 at all times cooperate to secure the fastener in the hole. To release the fastener 10 from the hole, the snap locks 17, 18 will need to be released from the inside of the weather shield 6.

The finger depressions 15, 16 are adapted such that in the fastened position of the fastener 10 as shown in Figs. 2 and 3 rain water and snow are allowed to readily pass the head part 11.

Between the dimple 20 and the lower surface of the head part 11 a soft plastic gasket member 21 is provided. This gasket member 21 is somewhat resilient, providing for a corresponding resiliency of the fastener 10, which is made use of when fastening or releasing the fastener 10 as is explained in more detail below. In the present embodiment the gasket member 21 is secured, i.e. glued, to the dimple 20; in other embodiments it may form part of the fastener 10.

The tip end 14 is released from the bead 19 of the bottom sash member 3a by means of rotation of the fastener 10. Rotation can be carried out without the use of a separate tool placing a thumb and an index finger of one hand in the finger depressions 15, 16, respectively. The fastener 10 can be rotated either way about the connection part 12, whereby the tip end 14 passes the downwards protruding bead 19, and the fastener 10 and weather shield 6 is released from the sash 3.

From the released position rotating the fastener 10 to snap back to the original, locked position is done in a corresponding manner. The combined resilience of the gasket member 21, longitudinal sealing members 7, 8, bead 19 and fastener 10 itself makes it possible for the tip end 14 to pass the bead 19 with a snapping sound and/or sensation telling a user that the fastener 10 has been fastened or released.

The gasket 21 and sealing members 7, 8 also ensure that the weather shield 6 is watertight in the area of the hole in the weather shield 6.

The fastener may comprise a further radial protrusion corresponding to and protruding oppositely to the radial protrusion 13 to provide for a stronger attachment, as is the case with the locking device 10a, which is described in more detail in the following. This would prevent the fastener/locking device from tilting when being rotated to or from a locked position.

The skylight or roof window comprising the burglar-proof locking device 10a shown in detail in Figs 8 to 10 is a preferred embodiment of the present invention. As will be clear from the following description, the general principles underlying the form and construction of the locking device 10a in most aspects correspond to those of the fastener 10 described above. Members of the locking device 10a corresponding in function to a member of the fastener 10 are provided with similar reference numbers and a subsequent consecutive letter.

Referring now to Figs 8 to 10 the locking device 10a comprises a locking member 30 having a first end 31 and a second end 32, which are positioned along a longitudinal axis A of the locking member 10a and connected by a connection part 12a, the outer dimensions of which correspond to the inner dimensions of the holes 9 of the weather shield 6. The first end 31 projects outwardly downwards from the locking device 10a and comprises a locking means 13b, 13c, which are described in more detail below.

The second end 32 of the locking member 30 provides an engagement or gripping means in the form of a snake-eye notch 33 comprising two holes or "snake eyes" 15a, 15b, which are adapted for engagement with a special tool in the form of a snake-eye tool 34 with a corresponding snake-eye projection 35, which in Figs 8 to 10 have been inserted into the snake-eye notch 33. The snake-eye tool 34 is preferably delivered together with the window and is not sold separately. The snake-eye notch 33 is surrounded by a head part or cap 11a with a centre aperture 36 allowing for insertion there-through of the snake-eye tool 34 for rotation of the locking device 10a, the cap 11a otherwise covering the second end 32 of the locking member 30.

The cap 11a is made from a durable material, preferably zinc, and is freely rotatable about the longitudinal axis A in relation to the locking member 30. The latter is achieved in that the cap 11a comprises an inwardly extending circular circumferential projection 39, which engages a corresponding circular circumferential slot 40 provided by the locking device 10a, the cap 11a being freely rotatable in the slot 40. The slot 40 is formed between a lower surface of a head 38 (of engagement member 37, cf. below) and an upper surface of the locking member 30. The upper surface of the locking member 30 is the surface of a circular disc 41 with a diameter corresponding to an inner diameter of a mushroom-shaped and hollow covering part 42 of the cap 11a, the covering part 42 covering the second end 32 of the locking device 10a to prevent burglar access. Hereby, entrance of dirt into the cap 11a is prevented. A gasket member 21a for abutting an upper surface of the weather shield or light dome 6 is provided abutting a lower surface of the disc 41. The circumferential projection 39 extends into a cylindrical part of the cap 11a, the cylindrical part defining the centre aperture 36 of the cap 11a.

In the present embodiment the snake-eye notch 33 is provided by means of a separate engagement member 37 comprising a head 38 and a longitudinal part 43, the latter extending coaxially into and being fixed, preferably glued, to the locking member 30. The snake-eye notch 33 is provided on top of the head 38. The engagement member 37 and the locking member 30 are moulded as separate parts from Zytel 80633.

The locking means 13a is adapted to rotate into engagement with the above-mentioned corresponding locking means 19 of the sash member 3. For this purpose, the locking means 13a of the first end 31 the connection part 12a comprises two oppositely projecting, clog-shaped, radial protrusions 13b, 13c for being snap-locked, by means of a 90° axial rotation, to the corresponding locking means 19 of the sash 3. As with the fastener 10 the radial protrusions 13b, 13c each comprises an upwards-projecting outer tip 14a, 14b for engaging the corresponding locking means 19. Thus, the present embodiment of a locking device comprises two radial protrusions 13b, 13c, but it may in other embodiments comprise only a single such protrusion corresponding to the fastener 10. Accordingly, the corresponding locking means of the sash 3 preferably comprises two downwards protruding, longitudinally extending beads, each similar to the bead 19 described above, but provided on opposite sides of the hole 9.

Comparing with and referring to Fig. 3, the head part 11a has a lower, flat surface, more specifically the gasket member 21a, which in the locked position abuts the upper surface of the weather shield 6, the connection part 12 extending through a hole 9 of the weather shield 6 into the sash 3. The locking device 10a is fastened and released in a matter similar to the fastener 10 by means of rotation; however, in this instance it is rotated by means of the snake-eye tool 34 and cannot be rotated by hand.

When fastened, the only accessible parts of the locking device 10a are the cap 11a and the snake-eye notch 35. Thus, if the cap 11a is rotated, the locking member 30 is not rotated; and rotation of the locking member 30 without use of the snake-eye tool 34 is safely prevented.

The engagement member of the fastener and/or locking device and the engagement means of the sash can be provided in other forms. The tip ends may for example turn opposite ways compared to the embodiment in the drawings, still providing a suitable snap lock. The engagement member could also be provided in the form of an ordinary thread. Further, the locking device 10a could be provided with snap locks corresponding to the snap locks 17, 18 of the fastener 10.

## Claims

1. A skylight or roof window comprising a frame (4), a sash member (3) and a light dome (6) or weather shield, the light dome or weather shield being fastened to said sash member (3) of said window by means of a number of burglar-proof locking devices (10a), each burglar-proof locking device (10a) comprising a locking member (30) having a first (31) and a second end (32), which first and second ends (31, 32) are positioned along a longitudinal axis (A) of said locking member (30), said first end (31) projecting outwardly from said locking device (10a) and comprising a locking means adapted to rotate into engagement with a corresponding locking means (19) of said sash member, wherein the sash member (3) is positioned in said frame (4),
**characterized in that**
said locking means of said first end (31) comprises at least one clog-shaped, radial protrusion (13b, 13c) for being snap-locked, preferably by means of a 90° axial rotation, to said corresponding locking means (19),
wherein said second end (32) of said locking member (30) provides an engagement means, such as a snake-eye notch (33), adapted for engagement with a special tool, such as a tool (34) comprising a snake-eye projection (35), said engagement means being surrounded by a cap (11a) with a centre aperture (36) allowing for insertion there-through of said special tool into said engagement means for rotation of said locking device (10a), said cap (11a) otherwise covering said second end (32) of said locking member (30), said cap (11a) being freely rotatable about said longitudinal axis (A) in relation to said locking member (30) such as to in a fastened position of said locking device (10a) prevent rotation of said locking member (30) without use of said special tool.

2. A skylight or roof window according to claim 1, the locking device further comprising a separate engagement member (37) comprising a head (38) and a longitudinal part (43), the latter extending coaxially into and being fixed, preferably glued, to said locking member (30) from said second end (32) of said locking member (30), said head (38) comprising said special tool engagement means.

3. A skylight or roof window according to claim 1 or 2, wherein said cap (11a) comprises an inwardly extending circumferential projection (39), which engages a corresponding circumferential slot (40) provided by said locking device (10a), said cap (11a) being freely rotatable in said slot (40).

4. A skylight or roof window according to claim 2 and 3, wherein said slot (40) is formed between a lower surface of said head (38) of said engagement member (37) and an upper surface of said locking member (30).

5. A skylight or roof window according to claim 4, wherein said upper surface of said locking member (30) is a substantially circular disc (41) with a diameter substantially corresponding to an inner diameter of a preferably mushroom-shaped covering part (42) of said cap (11a), said covering part (42) covering said remaining parts of said locking device (10a), preferably a gasket member (21a) for abutting an upper surface of said light dome (6) is provided abutting a lower surface of said disc (41).

6. A skylight or roof window according to claim 4 or 5, wherein said circumferential projection (39) extends into a cylindrical part of said cap (11a), said cylindrical part defining said centre aperture (36) of said cap (11a).

7. A locking device according to any one of the previous claims, wherein said locking means of said first end (31) comprises a further, oppositely projecting, clog-shaped, radial protrusion (13c, 13b) for being snap-locked, preferably by means of a 90° axial rotation, to said corresponding locking means (19).

8. A locking device according to any one of the previous claims, wherein said radial protrusion (13b, 13c) comprises an upwards projecting outer tip (14a, 14b) for engaging said corresponding locking means (19).

9. A skylight or roof window according to any one of the previous claims, wherein said locking member (30) passes through a passage or hole (9) of a peripheral panel of said light dome (6), said locking means of said locking member (30) engaging a corresponding locking member (19) of said sash member, locking said light dome (6) to said sash (3).

10. A skylight or roof window according to any one of claims 1 to 7, wherein the light dome (6) or weather shield is fastened to the sash member of said window by means of a number of said burglar-proof locking devices (10a) and by means of a number of non-burglar-proof fasteners (10).

11. A skylight or roof window according to claim 10, wherein said sash (3) comprises a bottom (3a), a top (3b) and two side sash members and encloses a windowpane (5) with two layers of glazing.

## Patentansprüche

1. Oberlicht oder Dachfenster, umfassend einen Rahmen (4), ein Flügelelement (3) und eine Lichtkuppel (6) oder einen Wetterschild, wobei die Lichtkuppel oder der Wetterschild mit mehreren einbruchsicheren Verriegelungsvorrichtungen (10a) an dem Flügelelement (3) des Fensters befestigt sind, wobei jede einbruchsichere Verriegelungsvorrichtung (10a) ein Verriegelungselement (30) mit einem ersten (31) und einem zweiten Ende (32) hat, wobei das erste und das zweite Ende (31, 32) entlang einer Längsachse (A) des Verriegelungselements (30) positioniert sind, wobei das erste Ende (31) von der Verriegelungsvorrichtung (10a) nach außen vorsteht und eine Verriegelungseinrichtung aufweist, die dazu angepasst ist, in einen Eingriff mit einer entsprechenden Verriegelungseinrichtung (19) des Flügelelements zu drehen, wobei das Flügelelement (3) in dem Rahmen (4) positioniert ist,
**dadurch gekennzeichnet,**
**dass** die Verriegelungseinrichtung des ersten Endes (31) wenigstens einen klotzförmigen, radialen Vorsprung (13b, 13c) für den Schnappverschluss, vorzugsweise mittels einer 90° Axialdrehung, mit der entsprechenden Verriegelungseinrichtung (19) aufweist,
wobei das zweite Ende (32) des Verriegelungselements (30) eine Eingriffseinrichtung, wie eine Schlangenaugenkerbung (33), aufweist, die für den Eingriff mit einem Spezialwerkzeug, wie ein Werkzeug (34) mit einem Schlangenaugenvorsprung (35), angepasst ist,
wobei die Eingriffseinrichtung von einer Kappe (11a) mit einer zentralen Öffnung (36) umgeben ist, durch die das Spezialwerkzeug in die Eingriffseinrichtung zum Drehen der Verriegelungsvorrichtung (10a) eingesetzt werden kann, wobei die Kappe (11a) ansonsten das zweite Ende (32) des Verriegelungselements (30) abdeckt, wobei die Kappe (11a) frei um die Längsachse (A) in Relation zu dem Verriegelungselement (30) drehbar ist, um in einer befestigten Position der Verriegelungseinrichtung (10a) eine Drehung des Verriegelungselements (30) ohne Verwendung des Spezialwerkzeugs zu verhindern.

2. Oberlicht oder Dachfenster nach Anspruch 1, wobei die Verriegelungsvorrichtung ferner ein separates Eingriffselement (37) mit einem Kopf (38) und einem Längsteil (43) aufweist, wobei sich Letzteres von dem zweiten Ende (32) des Verriegelungselements (30) koaxial in das Verriegelungselement (30) erstreckt und an diesem befestigt, vorzugsweise angeklebt, ist, wobei der Kopf (38) die Spezialwerkzeug-Eingriffseinrichtung aufweist.

3. Oberlicht oder Dachfenster nach Anspruch 1 oder 2, wobei die Kappe (11a) einen sich nach innen erstreckenden Umfangsvorsprung (39) aufweist, der in einen entsprechenden Umfangsschlitz (40) eingreift, der durch die Verriegelungsvorrichtung (10a) bereitgestellt ist, wobei die Kappe (11a) in dem Schlitz (40) frei drehbar ist.

4. Oberlicht oder Dachfenster nach den Ansprüchen 2 und 3, wobei der Schlitz (40) zwischen einer unteren Oberfläche des Kopfes (38) des Eingriffselements (37) und einer oberen Oberfläche des Verriegelungselements (30) ausgebildet ist.

5. Oberlicht oder Dachfenster nach Anspruch 4, wobei die obere Oberfläche des Verriegelungselements (30) eine im Wesentlichen kreisförmige Scheibe (41) ist, die einen Durchmesser aufweist, der im Wesentlichen einem Innendurchmesser eines vorzugsweise pilzförmigen Abdeckteils (42) der Kappe (11a) entspricht, wobei der Abdeckteil (42) die übrigen Teile der Verriegelungsvorrichtung (10a) abdeckt, wobei vorzugsweise ein Dichtungselement (21a) zum Anliegen an einer oberen Oberfläche der Lichtkuppel (6) bereitgestellt ist und an einer unteren Oberfläche der Scheibe (41) anliegt.

6. Oberlicht oder Dachfenster nach den Ansprüchen 4 oder 5, wobei sich der Umfangsvorsprung (39) in einen zylindrischen Teil der Kappe (11a) erstreckt, wobei der zylindrische Teil die zentrale Öffnung (36) der Kappe (11a) definiert.

7. Verriegelungsvorrichtung nach einem der vorhergehenden Ansprüche, wobei die Verriegelungseinrichtung des ersten Endes (31) einen weiteren, entgegengesetzt vorstehenden, klotzförmigen, radialen Vorsprung (13c, 13b) für den Schnappverschluss, vorzugsweise mittels einer 90° Axialdrehung, mit der entsprechenden Verriegelungseinrichtung (19) aufweist.

8. Verriegelungsvorrichtung nach einem der vorhergehenden Ansprüche, wobei der radiale Vorsprung (13b, 13c) eine nach oben vorspringende äußere Spitze (14a, 14b) für den Eingriff mit der entsprechenden Verriegelungseinrichtung (19) aufweist.

9. Oberlicht oder Dachfenster nach einem der vorhergehenden Ansprüche, wobei das Verriegelungselement (30) durch einen Durchgang oder ein Loch (9) einer Umfangsscheibe der Lichtkuppel (6) verläuft, wobei die Verriegelungseinrichtung des Verriegelungselements (30) in Eingriff ist mit einem entsprechenden Verriegelungselement (19) des Flügelelements, wodurch die Lichtkuppel (6) mit dem Flügel (3) verriegelt ist.

10. Oberlicht oder Dachfenster nach einem der Ansprüche 1 bis 7, wobei die Lichtkuppel (6) oder der Wetterschild mit mehreren der einbruchsicheren Verriegelungsvorrichtungen (10a) und mit mehreren nicht-einbruchssicheren Befestigungsmitteln (10) an dem Flügelelement des Fensters befestigt ist.

11. Oberlicht oder Dachfenster nach Anspruch 10, wobei der Flügel (3) ein unteres Flügelelement (3a), ein oberes Flügelelement (3b) und zwei seitliche Flügelelemente aufweist und eine Fensterscheibe (5) mit Doppelverglasung einschließt.

## Revendications

1. Lanterneau ou fenêtre de toit comprenant un cadre (4), un organe de châssis (3) et un puits de lumière (6) ou une protection contre les intempéries, le puits de lumière ou la protection contre les intempéries étant fixé audit organe de châssis (3) de ladite fenêtre au moyen d'un nombre de dispositifs de verrouillage antieffraction (10a), chaque dispositif de verrouillage antieffraction (10a) comprenant un organe de verrouillage (30) ayant une première (31) et une seconde (32) extrémité, lesquelles première et seconde extrémités (31, 32) sont positionnées selon un axe longitudinal (A) dudit organe de verrouillage (30), ladite première extrémité (31) faisant saillie vers l'extérieur depuis ledit dispositif de verrouillage (10a) et comprenant un moyen de verrouillage adapté pour tourner en enclenchement avec un moyen de verrouillage (19) correspondant dudit organe de châssis, dans lequel l'organe de châssis (3) est positionné dans ledit cadre (4),
**caractérisé en ce que**
ledit moyen de verrouillage de ladite première extrémité (31) comprend au moins une protubérance radiale en forme de sabot (13b, 13c) pour être verrouillé par encliquetage, de préférence au moyen d'une rotation axiale de 90°, audit moyen de verrouillage (19) correspondant,
dans lequel ladite seconde extrémité (32) dudit organe de verrouillage (30) fournit un moyen d'enclenchement, tel qu'une encoche en oeil de serpent (33), adaptée pour s'enclencher avec un outil spécial, tel qu'un outil (34) comprenant une saillie en oeil de serpent (35), ledit moyen d'enclenchement étant entouré d'un capuchon (11a) avec une ouverture centrale (36) permettant l'insertion au travers dudit outil spécial dans ledit moyen d'enclenchement pour une rotation dudit dispositif de verrouillage (10a), ledit capuchon (11a) couvrant sinon ladite seconde extrémité (32) dudit organe de verrouillage (30), ledit capuchon (11a) étant librement rotatif autour dudit axe longitudinal (A) par rapport audit organe de verrouillage (30) de façon, dans une position fixée dudit dispositif de verrouillage (10a), à empêcher une rotation dudit organe de verrouillage (30) sans utiliser ledit outil spécial.

2. Lanterneau ou fenêtre de toit selon la revendication 1, le dispositif de verrouillage comprenant en outre un organe d'enclenchement séparé (37) comprenant une tête (38) et une partie longitudinale (43), cette dernière s'étendant coaxialement dans et étant arrimée, de préférence collée, audit organe de verrouillage (30) depuis ladite seconde extrémité (32) dudit organe de verrouillage (30), ladite tête (38) comprenant ledit moyen d'enclenchement d'outil spécial.

3. Lanterneau ou fenêtre de toit selon la revendication 1 ou 2, dans lequel ledit capuchon (11a) comprend une saillie circonférentielle (39) s'étendant vers l'intérieur, qui enclenche une fente circonférentielle (40) correspondante fournie par ledit dispositif de verrouillage (10a), ledit capuchon (11a) étant librement rotatif dans ladite fente (40).

4. Lanterneau ou fenêtre de toit selon les revendications 2 et 3, dans lequel ladite fente (40) est formée entre une surface inférieure de ladite tête (38) dudit organe d'enclenchement (37) et une surface supérieure dudit organe de verrouillage (30).

5. Lanterneau ou fenêtre de toit selon la revendication 4, dans lequel ladite surface supérieure dudit organe de verrouillage (30) est un disque sensiblement circulaire (41) avec un diamètre correspondant sensiblement à un diamètre intérieur d'une partie couvrante de préférence en forme de champignon (42) dudit capuchon (11a), ladite partie couvrante (42) couvrant lesdites parties restantes dudit dispositif de verrouillage (10a), de préférence un organe de joint d'étanchéité (21a) pour être contigu à une surface supérieure dudit puits de lumière (6) est prévu contigu à une surface inférieure dudit disque (41).

6. Lanterneau ou fenêtre de toit selon la revendication 4 ou 5, dans lequel ladite saillie circonférentielle (39) s'étend dans une partie cylindrique dudit capuchon (11a), ladite partie cylindrique définissant ladite ouverture centrale (36) dudit capuchon (11a).

7. Dispositif de verrouillage selon l'une quelconque des revendications précédentes, dans lequel ledit moyen de verrouillage de ladite première extrémité (31) comprend une protubérance radiale supplémentaire en forme de sabot saillante de façon opposée (13c, 13b) pour être verrouillée par encliquetage, de préférence au moyen d'une rotation axiale de 90°, sur ledit moyen de verrouillage (19) correspondant.

8. Dispositif de verrouillage selon l'une quelconque des revendications précédentes, dans lequel ladite protubérance radiale (13b, 13c) comprend une pointe extérieure saillant vers le haut (14a, 14b) pour enclencher ledit moyen de verrouillage (19) correspondant.

9. Lanterneau ou fenêtre de toit selon l'une quelconque des revendications précédentes, dans lequel ledit organe de verrouillage (30) passe à travers un passage ou un trou (9) d'un panneau périphérique dudit puits de lumière (6), ledit moyen de verrouillage dudit organe de verrouillage (30) enclenchant un organe de verrouillage (19) correspondant dudit organe de châssis, verrouillant ledit puits de lumière (6) sur ledit châssis (3).

10. Lanterneau ou fenêtre de toit selon l'une quelconque des revendications 1 à 7, dans lequel le puits de lumière (6) ou la protection contre les intempéries est fixé à l'organe de châssis de ladite fenêtre au moyen d'un nombre de dispositifs de verrouillage antieffraction (10a) et au moyen d'un nombre de fixations non anti-effractions (10).

11. Lanterneau ou fenêtre de toit selon la revendication 10, dans lequel ledit châssis (3) comprend une partie basse (3a), une partie haute (3b) et deux organes de châssis de côté et renferme un carreau de verre (5) avec deux couches de vitrage.
